# EUROPÄISCHE PATENTANMELDUNG

(11) **EP 2 672 195 A2**
(43) Veröffentlichungstag der Anmeldung: **11.12.2013**
(21) Anmeldenummer: 13170528.7
(22) Anmeldetag: 04.06.2013
(51) Int. Cl.: F24J 2/04, F24J 2/34

(54) **Verfahren zur Speicherung thermischer Energie in einer Gebäudeumhüllung und Befestigungsvorrichtung für eine Gebäudeumhüllung**

(30) Priorität: 04.06.2012 DE 102012104837
(71) Anmelder: Zeumer, Martin, 64285 Darmstadt (DE)
(72) Erfinder: Zeumer, Martin, 64285 Darmstadt (DE)
(74) Vertreter: Katscher Habermann Patentanwälte

(57) **Zusammenfassung**

Bei einem Verfahren zur Speicherung thermischer Energie in einer Gebäudeumhüllung, wobei die Gebäudeumhüllung einen einem Gebäude zugewandten inneren Gebäudeabschluss und eine beabstandet dazu angeordnete äußere Hülle aufweist, zwischen denen ein Wärmeträgerfluid strömen kann, wird das durch eine Sonneneinstrahlung erwärmte Wärmeträgerfluid aus einem höheren Bereich der Gebäudeumhüllung einer ersten, sonnenzugewandten Gebäudeseite in einen niedrigeren Bereich der Gebäudeumhüllung einer zweiten sonnenangewandten Gebäudeseite überführt. Ein Anteil der in dem erwärmten Wärmeträgerfluid enthaltenen thermischen Energie wird einer thermischen Speichereinrichtung zugeführt und darin gespeichert. Eine Befestigungsvorrichtung (17) für eine Gebäudefassade mit einem ersten Befestigungselement (18) und mit einem zweiten Befestigungselement (20) zum Festlegen eines Hüllenelements (30) an der Befestigungsvorrichtung (17) weist an einer Vorderseite (21) des zweiten Befestigungselements (20) zwei beabstandete und nach außen vorspringenden Anschläge (22) und ein näherungsweise U-förmiges Profilelement (24) mit zwei beabstandeten Schenkeln (25) und einem die beiden Schenkel (25) verbindenden verformbaren Verbindungsabschnitt (26) auf.

## Beschreibung

Die Erfindung betrifft ein Verfahren zur Speicherung thermischer Energie in einer Gebäudeumhüllung, wobei die Gebäudeumhüllung einen dem Gebäude zugewandten inneren Gebäudeabschluss und eine beabstandet dazu angeordnete äußere Hülle aufweist, zwischen denen ein Wärmeträgerfluid strömen kann.

Gebäude und insbesondere Wohngebäude werden zur Vermeidung oder Reduzierung thermischer Verluste im Bereich einer Außenhülle mit einer Wärmedämmung versehen. Die in dem Gebäude befindliche Wärmeenergie soll dabei möglichst in dem Gebäude zurückgehalten werden und eine unerwünschte Übertragung der Wärmeenergie durch die Außenhülle des Gebäudes hindurch reduziert oder vermieden werden.

Es sind verschiedene Verfahren bekannt, mit denen auf unterschiedliche Art und Weise versucht wird, die auf ein Gebäude einwirkende thermische Sonnenenergie zur Beheizung und zur Klimatisierung der Innenräume des Gebäudes nutzbar zu machen. Durch eine effiziente Wärmedämmung wird allerdings ein Wärmeübertrag von außen durch die Außenhülle hindurch erschwert. Die auf das Gebäude auftreffende Solarenergie kann beispielsweise mit Fotovoltaik-Anlagen in elektrische Energie umgewandelt und dem Gebäude zugeführt werden. Ebenso sind Solarthermie-Anlagen bekannt, in denen Wasser oder ein anderes geeignetes Wärmeträgermedium erhitzt und zur Energiegewinnung einer Wandlereinrichtung oder einem Verbraucher in dem Gebäude zugeführt werden kann. Derartige Anlagen zur Nutzung der auf das Gebäude auftreffenden Sonnenenergie sind mit erheblichen Kosten für die Herstellung und deren Betrieb dieser Anlagen verbunden. Weiterhin sind transparente Wärmedämmungen (TWD) bekannt, die solare Strahlung transmittieren und die Energie so dem Innenraum zur Verfügung stellen. Letztlich bieten auch Fenster einen solaren Energieeintrag. Beide Systeme sind jedoch in ihrem Flächenpotenzial begrenzt und können nicht als umfassende Gebäudeumhüllung eingesetzt werden, ohne die Gefahr einer Überhitzung des Gebäudes zu bedingen.

Um warme Luft zu erzeugen und für die Erwärmung eines Gebäudes zu nutzen ist es aus der Praxis bekannt, das Gebäude zumindest bereichsweise mit einer Gebäudeumhüllung zu versehen, wobei zwischen einem dem Gebäude zugewandten inneren Gebäudeabschluss und einer beabstandet angeordneten äußeren Hülle ein Hohlraum gebildet wird. Die äußere Hülle ist dabei zweckmäßigerweise witterungsbeständig, übernimmt die Funktion der wasserführenden Schicht und ist gleichzeitig möglichst durchlässig gegenüber der von der Sonne kommenden Wärmestrahlung.

Wenn die in dem von dem Hohlraum umschlossenen Volumen befindliche Luft von der einfallenden Wärmestrahlung der Sonne erwärmt wird, sammeln sich erwärmte Luftmassen in einem oberen Bereich des Hohlraums und können von dort über Lüftungskanäle in das Gebäudeinnere geführt werden. Durch die Verwendung von Ventilatoren oder anderen strömungserzeugenden Einrichtungen kann die in dem Hohlraum der Gebäudeumhüllung erzeugte warme Luft in dem Gebäudeinneren verteilt werden. Zweckmäßigerweise wird zusätzlich dafür gesorgt, dass kühle Luft aus dem Gebäudeinneren oder von außerhalb des Gebäudes in einem unteren Bereich in den Hohlraum einströmen kann, um einen Unterdruck in dem Hohlraum zu vermeiden. Die eingeströmte kühle Luft kann dort erwärmt und anschließend nutzbringend verwendet werden.

Eine Speicherung der auf diese Art und Weise erzeugten Warmluft bzw. der darin enthaltenen thermischen Energie ist ohne geeignete Wandlereinrichtungen derzeit nicht möglich. Die erwärmte Luft kann nur solange zur Erwärmung des Gebäudeinneren verwendet werden, bis sich die erwärmte Luft wieder abkühlt. Einzig die thermische Masse der angelagerten Bauteile eines Raumes ist in der Lage, die Energie im Innenraum des Gebäudes zu speichern. Da die äußere Hülle der Gebäudeumhüllung eine hohe Wärmedurchlässigkeit aufweist, um eine rasche Erwärmung der in dem Hohlraum befindlichen Luft zu begünstigen, kann die äußere Hülle einen Wärmeverlust der erwärmten Luft in dem Hohlraum nicht verhindern oder nennenswert verzögern, wenn sich die Umgebung beispielsweise abends und nachts wieder abkühlt.

In den Sommermonaten, in denen tagsüber eine besonders hohe Sonneneinstrahlung erfolgt und deshalb eine hohe Wärmeerzeugung in der Gebäudeumhüllung möglich ist, sind gleichzeitig die Umgebungstemperaturen üblicherweise derart hoch, dass das Gebäudeinnere nicht zusätzlich erwärmt werden soll. Während einer kühlen Nacht findet keine Sonneneinstrahlung statt, die erforderlich wäre, um in dem Hohlraum nutzbare Warmluft zu erzeugen. Dies führt dazu, dass die Gewinnung thermischer Energie in einer derartigen Gebäudeumhüllung nur dann vorteilhaft genutzt werden kann, wenn sowohl niedrige Umgebungstemperaturen vorliegen als auch eine ausreichend intensive Sonneneinstrahlung auf die Gebäudeumhüllung auftrifft, so dass die in der Gebäudeumhüllung erzeugte Warmluft zur Beheizung des nicht von der Umgebung erwärmten Gebäudeinneren verwendet werden kann.

Es wäre zweckmäßig, wenn die auf die Gebäudeumhüllung einfallende Sonneneinstrahlung gespeichert werden könnte, um beispielsweise tagsüber thermische Energie zu erzeugen und zu speichern, die dann nachts oder bei einem Abkühlen der Umgebung dem Gebäudeinneren zugeführt werden könnte.

Es wird deshalb als eine Aufgabe der vorliegenden Erfindung angesehen, ein eingangs genanntes Verfahren zur Speicherung thermischer Energie so auszugestalten, dass mit möglichst einfachen Mitteln und einem geringen Kostenaufwand thermische Energie in der Gebäudeumhüllung gespeichert werden kann, um die gespeicherte thermische Energie zu einem späteren Zeitpunkt dem Gebäudeinneren zuführen zu können.

Diese Aufgabe wird erfindungsgemäß dadurch gelöst, dass das durch eine Sonneneinstrahlung erwärmte Wärmeträgerfluid aus einem höheren Bereich der Gebäudehülle einer ersten, sonnenzugewandten Gebäudeseite in einen niedrigeren Bereich der Gebäudehülle einer zweiten, sonnenabgewandten Gebäudeseite überführt wird. Auf diese Weise können auch Bereiche der Gebäudeumhüllung zur Aufnahme und dadurch zur temporären Speicherung des Wärmeträgerfluids, bzw. von thermischer Energie genutzt werden, die auf einer sonnenabgewandten Gebäudeseite angeordnet sind und in denen mangels direkter Sonneneinstrahlung nur geringe thermische Energie erzeugt werden kann. Eine aufwändige Umwandlung der in dem Wärmeträgerfluid gespeicherten thermischen Energie ist nicht erforderlich.

Als Wärmeträgerfluid können beispielsweise geeignete Flüssigkeiten wie Wasser oder aber gasförmige Wärmeträgermedien verwendet werden. Ein Wärmeträgerfluid mit einer hohen spezifischen Wärmekapazität ermöglicht eine große Speicherwirkung für die von der Sonneneinstrahlung aufgenommene Wärmeenergie. Wasser als Wärmeträgerfluid kann beispielsweise durch die Anordnung eines geeigneten und mit Wasser gefüllten Schlauchsystems innerhalb des Hohlraums zwischen der äußeren Hülle und dem Gebäudeabschluss eingesetzt werden.

Vorzugsweise ist vorgesehen, dass durch geeignete Strömungserzeugungseinrichtungen eine Verteilung des von der Sonneneinstrahlung erwärmten Wärmeträgerfluids in Bereiche erfolgt, bzw. erzwungen wird, in denen keine oder nur eine geringe Erwärmung des dort befindlichen Wärmeträgerfluids stattgefunden hat und in denen sich kühleres Wärmeträgerfluid befindet, dass dann durch das erwärmte Wärmeträgerfluid verdrängt wird. Es ist denkbar, dass beispielsweise durch Pumpen oder Ventilatoren eine Zirkulation des Wärmeträgerfluids erzwungen wird, so dass eine näherungsweise gleichmäßige Erwärmung des gesamten Wärmeträgerfluids erfolgt. Es ist alternativ auch möglich, erwärmtes Wärmeträgerfluid gezielt in kühle Bereiche innerhalb der Gebäudeumhüllung zu fördern, um auch diese Bereiche zum Sammeln und Speichern der durch die Sonneneinstrahlung eingebrachten Wärmeenergie zu verwenden. Das erwärmte Wärmeträgerfluid kann über einen Verteilerkanal großflächig in kühlere Bereiche innerhalb der Gebäudeumhüllung eingebracht und verteilt werden.

Eine besonders kostengünstige Möglichkeit ist die Verwendung von Luft als Wärmeträgerfluid. Eine aufwändige Abdichtung des in der Gebäudeumhüllung erzeugten Hohlraums, in dem sich das Wärmeträgerfluid befindet, ist nicht erforderlich. Eventuelle Undichtigkeiten in der Gebäudeumhüllung führen lediglich dazu, dass die Effizienz zur Sammlung und Nutzung der von der Sonneneinstrahlung gewonnenen thermischen Energie in der Gebäudeumhüllung sinkt.

Die äußere Hülle kann durch witterungsbeständige Folien oder Leichtbauplatten hergestellt werden, die beabstandet zu der Gebäudefassade außen angebracht werden. Die Gebäudefassade dient dabei als innerer Gebäudeabschluss der Gebäudeumhüllung. Eine derartige Gebäudeumhüllung kann einfach und kostengünstig nachträglich an einem bereits bestehenden Gebäude angebracht werden. Auf diese Weise kann das erfindungsgemäße Verfahren im Rahmen einer Sanierung oder energetischen Aufwertung eines bereits bestehenden Gebäudes zum Einsatz gebracht werden.

Vorzugsweise ist vorgesehen, dass die erwärmte Luft aus einem höheren Bereich der Gebäudeumhüllung in einen Strömungskanal eingesaugt und durch den Strömungskanal hindurch zu dem niedrigeren Bereich der Gebäudeumhüllung auf der sonnenabgewandten Gebäudeseite geführt wird. Durch das Ansaugen der erwärmten Luft aus dem höheren Bereich kann zu einem beliebigen Zeitpunkt eine vorgebbare Menge an erwärmter Luft umgeschichtet und in kältere Bereiche der Umhüllung transportiert werden. Gleichzeitig kann kühle Luft in die Bereiche der sonnenzugewandten Gebäudeseite nachströmen und dort durch die Sonneneinstrahlung erhitzt werden. In der Gebäudeumhüllung kann dadurch eine größere Luftmenge erwärmt, verteilt und vorgehalten werden.

Gemäß einer besonders vorteilhaften Ausgestaltung des Erfindungsgedankens ist vorgesehen, dass ein Anteil der in dem erwärmten Wärmeträgerfluid enthaltenen thermischen Energie in eine thermische Speichereinrichtung eingebracht und gespeichert wird. Eine besonders kostengünstige thermische Speichereinrichtung kann beispielsweise eine an dem Gebäudeabschluss angebracht Holzverkleidung sein. Es hat sich gezeigt, dass der billige und leicht zu verarbeitende Baustoff Holz gute Eigenschaften für eine Zwischenspeicherung der thermischen Energie aufweist. Die Holzverkleidung erwärmt sich durch den Kontakt mit der erwärmten Luft, beziehungsweise mit dem erwärmten Wärmeträgerfluid. Zusätzlich Vorrichtungen, um der erwärmten Luft einen Anteil der thermischen Energie zu entziehen und in eine Speichereinrichtung zu überführen, sind nicht erforderlich. Anstelle von Holz kann jedes andere Material verwendet werden, das thermische Energie aus der erwärmten Luft, beziehungsweise aus dem verwendeten Wärmeträgerfluid aufnehmen und zumindest über einen gewissen Zeitraum speichern, beziehungsweise zurückhalten kann.

Die Erfindung betrifft auch eine Befestigungsvorrichtung für eine Gebäudefassade mit einem ersten Befestigungselement zum Festlegen der Befestigungsvorrichtung an einer Außenwand eines Gebäudes und mit einem zweiten Befestigungselement zu Festlegen eines Hüllenelements an der Befestigungsvorrichtung, wobei das erste Befestigungselement über ein Abstandselement mit dem zweiten Befestigungselement verbunden ist. Derartige Befestigungsvorrichtungen sind aus der Praxis bekannt und werden beispielsweise zur Befestigung einer Fassadenverkleidung verwendet. Die Befestigungsvorrichtung kann dabei aus Holz oder aus einem geeigneten Kunststoffmaterial bestehen. Es ist ebenfalls denkbar, dass einzelne Bereiche oder Komponenten der Befestigungsvorrichtung oder die vollständige Befestigungsvorrichtung aus Metall hergestellt sind.

Die Festlegung einzelner Hüllenelemente an der Außenwand eines Gebäudes ist üblicherweise zeit- und kostenaufwändig. Die einzelnen Hüllenelemente müssen zuverlässig an der Außenwand des Gebäudes festgelegt werden. Wenn das Hüllenelement aus einem flexiblen Material wie beispielsweise aus einer Folie besteht, muss zusätzlich eine Verspannung des Hüllenelements erfolgen. Bestehen die Hüllenelemente dagegen aus formstabilen Platten wie beispielsweise Leichtbauplatten oder für diesen Verwendungszweck optimierten Verkleidungsplatten, müssen die einzelnen Platten nicht nur zuverlässig an der Außenwand festgelegt werden, sondern auch so an den Befestigungsvorrichtungen gelagert werden, dass sich die einzelnen Platten in Abhängigkeit der Umgebungstemperatur ausdehnen oder zusammenziehen können.

Um das vorangehend beschriebene Verfahren kostengünstig durchführen zu können ist es demzufolge erforderlich, eine möglichst kostengünstig herstellbare Befestigungsvorrichtung so auszugestalten, dass die einzelnen Hüllenelemente mit einem möglichst geringen Aufwand zuverlässig an der Außenwand oder an der Fassade eines Gebäudes festgelegt werden können.

Diese Aufgabe wird erfindungsgemäß dadurch gelöst, dass das zweite Befestigungselement an einer Vorderseite zwei beabstandete und nach außen vorspringende Anschläge aufweist und dass ein näherungsweise U-förmiges Profilelement mit zwei beabstandeten Schenkels und einem die beiden Schenkel verbindenden verformbaren Verbindungsabschnitt an dem zweiten Befestigungselement angeordnet ist, wobei von der Vorderseite des Befestigungselements abgewandten Schenkelenden der Schenkel jeweils ein zugeordnetes Hüllenelement festlegbar ist, wobei der Verbindungsabschnitt des Profilelements an der Vorderseite des zweiten Befestigungselements an den Anschlägen anliegend mit einem zwischen den Anschlägen angeordneten Befestigungsmittel so festlegbar ist, dass im festgelegten Zustand der Verbindungsabschnitt des Profilelements verformt ist und die Schenkelenden der Schenkel des Profilelements aufeinander zu verlagert sind.

Durch die erfindungsgemäße Verwendung und Befestigung eines zunächst näherungsweise U-förmigen Profilelements wird in einfacher Weise erreicht, dass in einem Endzustand die von der Außenwand des Gebäudes abstehenden Schenkelenden des Profilelements einen geringeren Abstand als zu Beginn der Montage des Profilelements aufweisen. Wenn zwischen den Schenkelenden benachbart angeordneter Befestigungsvorrichtungen ein flexibles Hüllenelement wie beispielsweise eine witterungsbeständige Folie befestigt wurde, wird der betreffenden Folienabschnitt durch die Verlagerung der Schenkelenden auseinander gezogen und gespannt.

Ebenso können formstabile Hüllenelemente zwischen zwei benachbarten Befestigungsvorrichtungen klemmend festgelegt werden, in dem die jeweils abgewandten Schenkelenden zur Festlegung des betreffenden Hüllenelements verwendet werden, die bei einer Befestigung des Profilelements an dem zweiten Befestigungselement in Richtung des formstabilen Hüllenelements verlagert werden.

Einer Ausgestaltung des Erfindungsgedankens zufolge ist vorgesehen, dass das Profilelement eine Profilschiene ist. Eine Profilschiene lässt sich einfach und kostengünstig herstellen und ermöglicht eine Festlegung der zugeordneten Hüllenelemente über die gesamte Erstreckung der Profilschiene, beziehungsweise entlang der gesamten Seitenkante der Hüllenelemente. Gleichzeitig führt es die wasserführende Schicht von einem Hüllenelement zu einem zweiten weiter.

Um die zugeordneten Hüllenelemente rasch und zuverlässig an den Schenkeln des Profilelements festlegen zu können ist vorgesehen, dass in dem Profilelement ein näherungsweise U-förmiges Halteelement angeordnet ist. Zwischen dem Halteelement und den angrenzenden Bereichen des Profilelements, das das Halteelement umgibt, können dazwischen angeordnete Randbereiche eines flexiblen Hüllenelements klemmend festgelegt werden. Das Halteelement kann auch dazu verwendet werden, zusätzliche Befestigungselemente kraftschlüssig oder formschlüssig an dem Profilelement bzw. im Bereich der Schenkel des Profilelements festzulegen, die der Halterung oder der Aufnahme der zugeordneten Hüllenelemente dienen.

Das U-förmige Halteelement dient darüber hinaus der Verstärkung des Profilelements. Zweckmäßigerweise weist das U-förmige Halteelement ebenso wie das Profilelement zwei über einen Verbindungsabschnitt miteinander verbundene Schenkel auf. Der Verbindungsabschnitt des Haltelements kann ebenso wie der Verbindungsabschnitt des Profilelements verformbar ausgestaltet sein. Die Verbindungsabschnitte können plastisch oder vorzugsweise elastisch verformbar ausgestaltet sein. Das Haltelement kann aus einem anderen Material als das Profilelement hergestellt sein.

Um die Montage des Halteelements dem Profilelement zu erleichtern ist vorgesehen, dass das Halteelement eine an das Profilelement angepasst Formgebung aufweist und in einem unbelasteten Ausgangszustand zu Beginn der Montage klemmend in dem Profilelement aufgenommen ist. Der Verbindungsabschnitt des Halteelements liegt dabei zumindest abschnittsweise flächig auf dem Verbindungsabschnitt des Profilelements auf, um eine gleichzeitige und übereinstimmende Verformung während der Montage zu gewährleisten.

In vorteilhafter Weise ist vorgesehen, dass zwischen den Halteelement und den beiden Schenkeln des Profilelements jeweils ein Zwischenraum ausgebildet ist, in dem ein Endbereich des zugeordneten Hüllenelements festlegbar ist. Insbesondere bei einer Verwendung eines flexiblen Hüllenelements wie beispielsweise einer flexiblen oder elastischen witterungsbeständigen Folie können in einem Randbereich des Hüllenelements Verdickungen angeordnet sein. Die in dem Zwischenraum zwischen dem Halteelement und dem Profilelement formschlüssig festgelegten Verdickungen können ein Herausrutschen oder ein unbeabsichtigtes Lösen des Hüllenelements von dem zugeordneten Profilelement zuverlässig verhindern.

Beispielsweise um flexible Hüllenelemente mehrlagig ausgestalten und die einzelnen Lagen aufspannen zu können ist vorgesehen, dass an der Befestigungsvorrichtung Spann- oder Federelemente zum Verspannen eines Hüllenelements festgelegt sind. Die Spann- oder Federelemente können zwei Streifen aufweisen, die zwischen zwei Lagen eines flexiblen Hüllenelements an der Befestigungsvorrichtung und dort zweckmäßigerweise an dem zweiten Befestigungselement festgelegt sind. Die beiden Streifen ragen bis in einen mittleren Bereich zwischen den beiden Lagen des flexiblen Hüllenelements und sind dort über ein elastisches Druckfederelement miteinander verbunden. Die Streifen drücken in dem mittleren Bereich die beiden jeweils von außen anliegenden Lagen des flexiblen Hüllenelements nach außen und bilden einen Zwischenraum zwischen den beiden Lagen. Es ist natürlich ebenfalls möglich, ein flexibles Hüllenelement mit drei oder mehr Lagen zu verwenden, die in geeigneter Weise miteinander kombiniert und beabstandet voneinander aufgespannt werden.

Das Haltelement kann weiterhin so ausgestaltet sein, dass an dem Halteelement oder zwischen dem Halteelement und dem umgebenden Profilelement Winkelprofile festgelegt werden können, die eine Seitenkante eines formstabilen Hüllenelements umgreifen. Die Winkelprofile können dabei so ausgestaltet sein, dass sie das aufzunehmende Hüllenelement kraftschlüssig oder formschlüssig halten und an der Befestigungsvorrichtung festlegen.

Um die während der Befestigung des Profilelements an dem zweiten Befestigungselement der Befestigungsvorrichtung erzwungene Verformung und Verlagerung der Schenkelenden des Profilelements zur klemmenden und elastischen Aufnahme eines zugeordneten plattenförmigen Hüllenelements nutzen zu können ist vorgesehen, dass beispielsweise ein linkes Schenkelende des Profilelements dazu verwendet wird, ein rechts an der Befestigungsvorrichtung anliegendes Hüllenelement zu ergreifen und zu halten. Die Winkelprofile oder andere geeignete Haltemittel sind zweckmäßigerweise übereinander mit Abstand zueinander angeordnet um das benachbart zu dem gegenüber liegenden Schenkelende angeordnete Hüllenelement ergreifen und halten zu können.

Nachfolgend werden Ausführungsbeispiele des Erfindungsgedankens näher erläutert, die in Zeichnung dargestellt sind. Es zeigt:
Fig. 1 eine schematische Darstellung eines mit einer Gebäudeumhüllung versehenen Gebäudes, bei dem das erfindungsgemäße Verfahren angewendet wird,
Fig. 2 eine perspektivische Ansicht einer Befestigungsvorrichtung für eine Gebäudeumhüllung mit einem Profilelement zu Beginn der Montage,
Fig. 3 die in Fig. 2 dargestellte Befestigungsvorrichtung, wobei ein Halteelement klemmend in dem Profilelement aufgenommen ist,
Fig. 4 die in Fig. 2 und 3 gezeigte Befestigungsvorrichtung, wobei an beiden Schenkelenden des Profilelements jeweils ein Randbereich eines flexiblen Hüllenelements festgelegt ist,
Fig. 5 die in den Fig. 2 bis 4 gezeigte Befestigungsvorrichtung in einem Endzustand nach der erfolgten Montage, wobei die zugeordneten flexiblen Hüllenelemente unter Zugspannung stehen,
Fig. 6 eine abweichende Ausgestaltung der Befestigungsvorrichtung, wobei zwischen dem Halteelement und dem Profilelement Winkelprofile zur Aufnahme von plattenförmigen Hüllenelementen festgelegt sind,
Fig. 7 die in Fig. 6 gezeigte Befestigungsvorrichtung in einem Endzustand nach der erfolgten Montage und Festlegung des Profilelements an einem zweiten Befestigungselement der Befestigungsvorrichtung,
Fig. 8 eine Abbildung des Befestigungsvorrichtung gemäß den Fig. 6 und 7 in dem bereits in Fig. 7 gezeigten Endzustand nach der Montage, wobei zusätzlich die von den Winkelprofilen umgriffenen und gehaltenen plattenförmigen Hüllenelemente abgebildet sind, und
Fig. 9 eine perspektivische Ansicht eines Moduls einer Gebäudeumhüllung, wobei zwischen zwei sich horizontalerstreckenden Befestigungsvorrichtungen auf einer dem Gebäudeabschluss zugewandten Seite eine als Speichereinrichtung dienende Holzverkleidung angeordnet ist und auf einer dem Gebäudeabschluss gegenüber liegenden Außenseite der Gebäudeumhüllung ein flexibles Hüllenelement an den beiden benachbarten Befestigungsvorrichtungen festgelegt und zwischen diesen Befestigungsvorrichtungen aufgespannt ist.

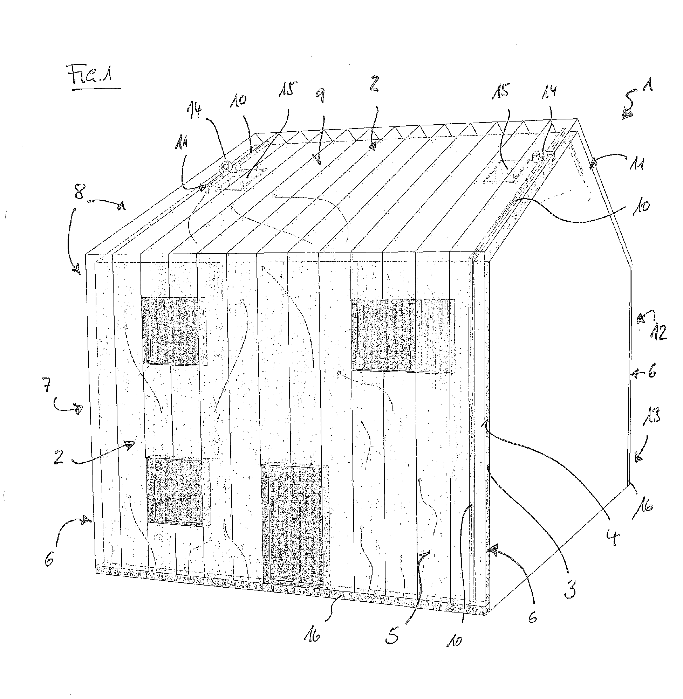

In Fig. 1 ist schematisch ein Gebäude 1 mit einer das Gebäude 1 umgebenden Gebäudeumhüllung 2 dargestellt. Zwischen einem von einer Gebäudefassade 3 gebildeten äußeren Gebäudeabschluss 4 und einer im Abstand zu diesem Gebäudeabschluss 4 angeordneten äußeren Hülle 5 befindet sich ein mit Luft gefüllter Hohlraum 6.

Die äußere Hülle 5 besteht aus einem witterungsbeständigen und gleichzeitig strahlungsdurchlässigen Hüllenmaterial. Die in dem Hohlraum 6 befindliche Luft wird auf einer sonnenzugewandten Gebäudeseite 7 von der einfallenden Sonnenstrahlung erwärmt. Bereits erwärmte Luftmengen steigen dabei in einen oberen Bereich 8 in der Gebäudeumhüllung 2 auf, der sich bei dem dargestellten Ausführungsbeispiel im Bereich einer geneigten Dachfläche 9 befindet, die ebenfalls von der äußeren Hülle 5 umgeben und bedeckt ist. Mit zunehmender Dauer der Sonneneinstrahlung und einer entsprechenden Erwärmung der in dem Hohlraum 6 befindlichen Luft nimmt die Menge an Warmluft zu, die sich in dem oberen Bereich 8 ansammelt.

Ein Strömungskanal 10 mit einer Eintrittsöffnung 11, die in dem oberen Bereich 8 der Gebäudeumhüllung 2 auf der sonnenzugewandten Gebäudeseite 7 angeordnet ist, führt auf eine gegenüber liegende und sonnenabgewandte Gebäudeseite 12 und mündet in einem unteren Bereich 13 auf der sonnenabgewandten Gebäudeseite 12. Aus dem oberen Bereich 8 wird auf der sonnenzugewandten Gebäudeseite 7 die sich dort ansammelnde Warmluft abgesaugt und durch den Lüftungskanal 10 dem unteren Bereich 13 der gegenüber liegenden und sonnenabgewandten Gebäudeseite 12 zugeführt. Um die Warmluft durch den Strömungskanal 10 in den unteren Bereich 13 zu fördern ist in dem Strömungskanal 10 eine Ventilatoreinrichtung 14 angeordnet. Die Ventilatoreinrichtung 14 wird über ein in unmittelbarer Nähe in dem oberen Bereich 8 angeordnetes Photovoltaikmodul 15 mit elektrischer Energie versorgt. Dabei kann zweckmäßigerweise vorgesehen sein, dass das Photovoltaikmodul 15 eine für den Betrieb der Ventilatoreinrichtung 14 ausreichende Versorgungsspannung erzeugt, falls eine ausreichend intensive Sonneneinstrahlung auf die Gebäudeumhüllung 2 der sonnenzugewandten Gebäudeseite 7 auftrifft, die gleichzeitig in dem Hohlraum 6 befindliche Luft erwärmt und in den oberen Bereich 8 und damit in den Erfassungsbereich der Eintrittsöffnung 11 des Strömungskanals 10 aufsteigen lässt. Eine Steuerungs- oder Regelungseinrichtung für die Ventilatoreinrichtung 14 ist in diesem Fall nicht erforderlich.

Wenn aus einem oberen Bereich 8 auf der sonnenzugewandten Gebäudeseite 7 erwärmte Luft durch den Strömungskanal 10 der gegenüber liegenden und sonnenabgewandten Gebäudeseite 12 zugeführt wird, werden auch sonnenabgewandte Bereiche des Hohlraums 6 zur Aufnahme von erwärmter Luft genutzt. Die in der Gebäudeumhüllung 2 insgesamt angesammelte thermische Energie nimmt dadurch zu. Die Gebäudeumhüllung 2 kann auch auf der sonnenabgewandten Gebäudeseite 12 zur Aufnahme und Speicherung von thermischer Energie genutzt werden.

Der Speichereffekt kann erheblich gesteigert werden, in dem in der Gebäudeumhüllung 2 zusätzliche Speicherelemente angeordnet sind, die thermische Energie von der erwärmten Luft aufnehmen und über einen Zeitraum speichern können. Geeignete Speicherelemente können beispielsweise Holzplatten oder Holzelemente sein, die an oder in der Gebäudefassade 3 angeordnet sind. Die Holzelemente werden durch den Kontakt mit der erwärmten Luft aufgeheizt. Sobald auf Grund einer reduzierten Sonneneinstrahlung bzw. einer sich abkühlenden Umgebung die Temperatur der in der Gebäudeumhüllung 2 befindlichen Luftmassen sinkt, kann in den Speicherelementen gespeicherte Wärmeenergie an die Luft wieder abgegeben werden und diese erwärmen beziehungsweise warm halten.

Um die aus dem oberen Bereich 8 von der sonnenzugewandten Gebäudeseite 7 in den unteren Bereich 13 der sonnenabgewandten Gebäudeseite 12 überführte Warmluft möglichst großflächig zu verteilen ist vorgesehen, dass der Strömungskanal 10 in einen sich in dem unteren Bereich 13 quer über die sonnenangewandte Gebäudeseite 12 erstreckenden Verteilerkanal 16 mündet. Der Verteilerkanal 16 weist zahlreiche voneinander beabstandete und nicht im einzelnen dargestellte Austrittsöffnungen auf, aus denen die von der gegenüber liegenden Gebäudeseite 7 angesaugte Warmluft austreten und sich auf der sonnenangewandten Gebäudeseite 12 verteilen kann.

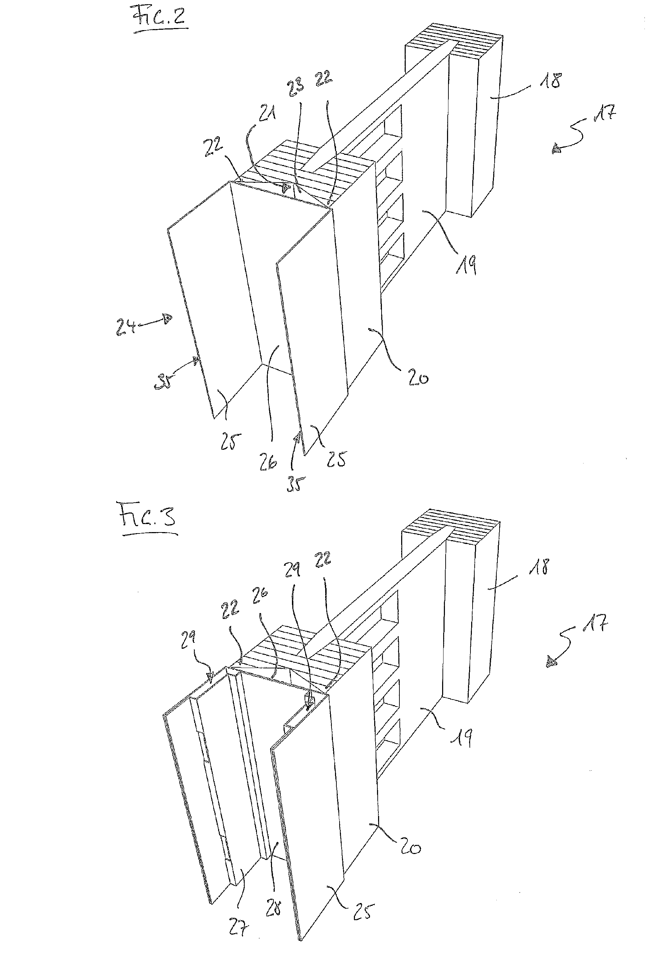

Um eine für die Durchführung dieses Verfahrens geeignete Gebäudeumhüllung 2 in einfacher Weise herstellen, beziehungsweise an der Gebäudefassade 3 montieren zu können eignet sich eine in den Fig. 2 bis 8 näher dargestellte Befestigungsvorrichtung 17. Die Befestigungsvorrichtung 17 weist ein erstes Befestigungselement 18 auf, das zur Befestigung an der Gebäudefassade 3 dient. Über ein stegartiges Abstandselement 19 ist ein in einem Abstand zu dem ersten Befestigungselement 18 angeordnetes zweites Befestigungselement 20 mit dem ersten Befestigungselement 18 verbunden. Das zweite Befestigungselement 20 weist eine konkav ausgestaltete Vorderseite 21 auf. Die dem ersten Befestigungselement 18 abgewandte Vorderseite 21 weist zwei beabstandete und nach außen vorspringende Anschläge 22 auf. Die beiden Anschläge 22 sind durch eine im Profil V-förmige Nut, beziehungsweise Ausnehmung 23 voneinander getrennt.

Ein U-förmiges Profilelement 24 mit zwei beabstandeten Schenkeln 25 wird zu Beginn der Montage mit einem die beiden abstehenden Schenkel 25 verbindenden Verformungsabschnitt 26 an die beiden Anschläge 22 angelegt (Fig. 2).

Zwischen die beiden Schenkel 25 des Profilelements 24 wird ein ebenfalls näherungsweise U-förmiges Haltelement 27 eingeführt und klemmend zwischen den beiden Schenkeln 25 festgelegt. Das Haltelement 27 weist ebenso wie das Profilelement 24 einen Verformungsabschnitt 28 auf, der im Wesentlichen vollflächig an dem Verformungsabschnitt 26 des Profilelements 24 anliegt.

Das Haltelement 27 weist eine stufenförmige, mehrfach abgewinkelte Formgebung auf. Zwischen dem Halteelement 27 und dem umgebenden Profilelement 24 wird auf beiden Seiten, beziehungsweise im Bereich der beiden Schenkel 25 jeweils ein Zwischenraum 29 gebildet (Fig. 3).

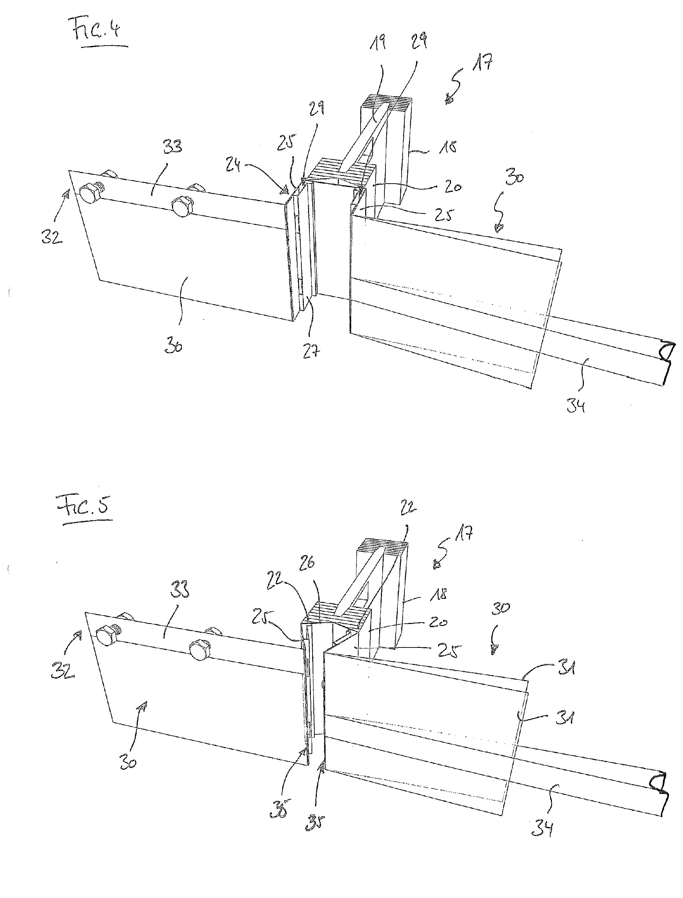

Ein Endbereich eines flexiblen Hüllenelements 30 wird klemmend zwischen dem Halteelement 27 und dem zugeordneten Schenkel 25 des Profilelements 24 aufgenommen und festgelegt (Fig. 4). Um ein unbeabsichtigtes Herausrutschen oder Ablösen des flexiblen Hüllenelements 30 von dem zugeordneten Schenkel 25 des Profilelements 24 zu verhindern kann ein zwischen dem Halteelement 27 und dem Schenkel 25 des Profilelements 24 angeordneter Randbereich des flexiblen Hüllenelements 30 dort eingearbeitete oder festgelegte Verdickungen aufweisen, die in den Zwischenraum 29 festgelegt sind.

Um die Befestigung der flexiblen Hüllenelemente 30 zu erleichtern ist es möglich, zunächst die beiden Randbereiche der angrenzenden flexiblen Hüllenelemente 30 zwischen den beiden Schenkeln 25 des Profilelements 24 anzuordnen, bevor anschließend das Halteelement 27 zwischen die Schenkel 25 des Profilelements 24 eingeführt und dort festgelegt wird, wodurch gleichzeitig die davon abgedeckten Randbereiche der angrenzenden flexiblen Hüllenelemente 30 an dem Profilelement 24 festgelegt und fixiert werden.

Die flexiblen Hüllenelemente 30 bestehen aus mehreren übereinander angeordneten Lagen 31 aus einem flexiblen und witterungsbeständigen Material. Entlang eines oberen Randbereichs 32 und eines nicht näher dargestellten unteren Randbereichs können Befestigungsstreifen 33 angeordnet sein, die die beiden Lagen 31 aufeinander fixieren. Beabstandet zu den Befestigungsstreifen 33 können federnde Spreizelemente 34 angeordnet sein, mit denen die beiden Lagen 31 auseinander gedrückt und zusätzlich aufgespannt werden (Fig. 5).

Um das Profilelement 24 an dem zweiten Befestigungselement 20 dauerhaft festzulegen wird das Profilelement 24 im Bereich des Verformungsabschnitts 26 mit einer Anzahl nicht näher dargestellter Befestigungsschrauben in der Nut 23 festgeschraubt. Dabei verformt sich der Verformungsabschnitt 26, bis er flächig an der konkav ausgestalteten Vorderseite 21 des zweiten Befestigungselements 20 anliegt. Dabei erzwingen die beiden beabstandet zueinander angeordneten Anschläge 22 eine Verlagerung der von der Vorderseite 21 abgewandten Schenkelenden 35 der Schenkel 25. Durch die Formgebung der Vorderseite 21 wird dabei gewährleistet, dass sich die Schenkelenden 35 während der Montage aufeinander zubewegen. Dadurch werden die flexiblen Hüllenelemente 30 zwischen zwei benachbart angeordneten Befestigungsvorrichtungen 17 aufgespannt (Fig. 5).

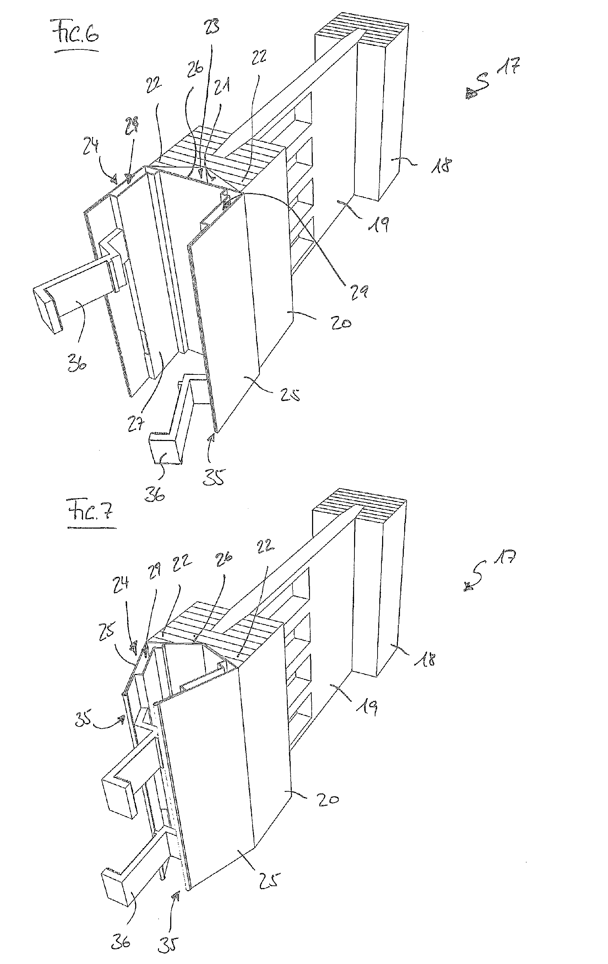

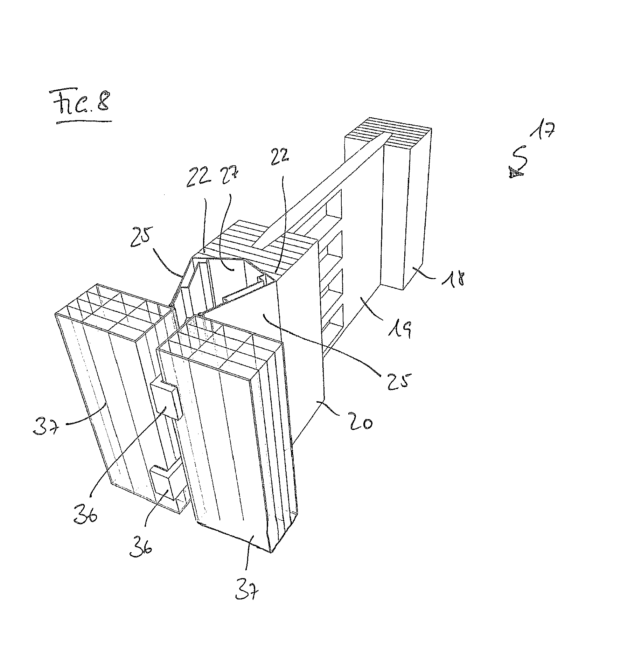

Bei einer in den Fig. 6 bis 8 exemplarisch gezeigten abweichenden Ausgestaltung der Befestigungsvorrichtung 17 sind an den beiden Schenkeln 25 des Profilelements 24 jeweils Winkelprofile 36 festgelegt. Die Winkelprofile 36 weisen dabei eine Formgebung auf, die zum Umgreifen und zuverlässigem Aufnehmen eines Endbereichs einer exemplarisch in Fig. 8 dargestellten formstabilen Hüllenplatte 37 geeignet sind. Dabei umgreift das in der Fig. 8 an dem links dargestellten Schenkel 25 festgelegte Winkelelement 36 die in Fig. 8 rechts dargestellte Hüllenplatte 37. Gleichzeitig umgreift das an dem rechten Schenkel 25 festgelegte Winkelelement 36 die in fieser Figur links dargestellte Hüllenplatte 37.

Durch die im Verlauf der Montage erzwungene Verlagerung der Schenkelenden 35 (Fig. 7) wird das an dem linken Schenkel 25 festgelegte Winkelelement 36 nach rechts gedrückt und ergreift und hält die rechts angeordnete Hüllenplatte 37.

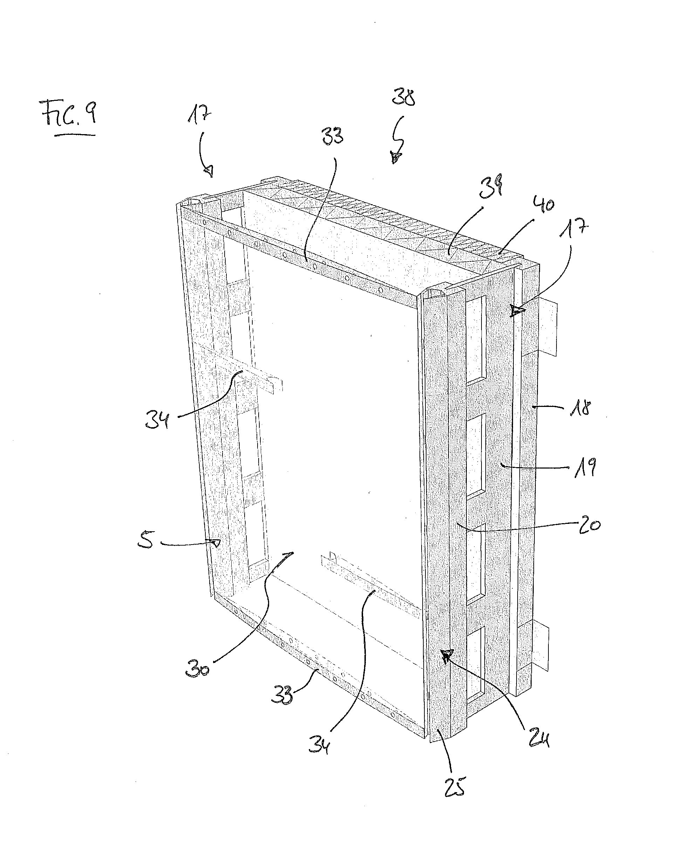

Bei dem in Fig. 9 dargestellten Modulabschnitt 38 einer Gebäudeumhüllung 2 ist zwischen zwei benachbarten Befestigungsvorrichtungen 17 ein flexibles Hüllenelement 30 aufgespannt. Zudem ist zwischen den beiden Befestigungsvorrichtungen 17 eine Holzplatte 39 auf der dem flexiblen Hüllenelement 30 gegenüber liegenden Seite angeordnet. Die Holzplatte 39 dient als Dämmung und zur Speicherung der thermischen Energie, die der von der Sonneneinstrahlung erwärmten Luft in dem Hohlraum 6 zwischen der durch die flexiblen Hüllenelemente 30 gebildeten äußeren Hülle 5 und der Holzplatte 39 von der Sonneneinstrahlung erwärmt wurde.

Die Holzplatte 39 ist auf einer der äußeren Hülle 5, beziehungsweise dem flexiblen Hüllenelement 30 abgewandten Außenseite mit einer Beschichtung aus einem flexiblen Dämmmaterial 40 bedeckt. Das Dämmmaterial 40 passt sich eventuellen Unebenheiten der Gebäudefasssade 3 an und dient unter anderen dazu, die in der Holzplatte 39 gespeicherte thermische Energie zur Gebäudefassade 3 zu übertragen.

## Patentansprüche

1. Verfahren zur Speicherung thermischer Energie in einer Gebäudeumhüllung (2), wobei die Gebäudeumhüllung (2) einen einem Gebäude (1) zugewandten inneren Gebäudeabschluss (4) und eine beabstandet dazu angeordnete äußere Hülle (5) aufweist, zwischen denen ein Wärmeträgerfluid strömen kann, **dadurch gekennzeichnet, dass** das durch eine Sonneneinstrahlung erwärmte Wärmeträgerfluid aus einem höheren Bereich (8) der Gebäudeumhüllung (2) einer ersten, sonnenzugewandten Gebäudeseite (7) in einen niedrigeren Bereich (13) der Gebäudeumhüllung (2) einer zweiten sonnenangewandten Gebäudeseite (12) überführt wird.

2. Verfahren nach Anspruch 1, **dadurch gekennzeichnet, dass** als Wärmeträgerfluid Luft verwendet wird.

3. Verfahren nach Anspruch 1 oder Anspruch 2, **dadurch gekennzeichnet, dass** durch geeignete Strömungserzeugungseinrichtungen eine Verteilung des von der Sonneneinstrahlung erwärmten Wärmeträgerfluids in Bereiche erfolgt, bzw. erzwungen wird, in denen keine oder nur eine geringe Erwärmung des dort befindlichen Wärmeträgerfluids stattgefunden hat.

4. Verfahren nach Anspruch 3, **dadurch gekennzeichnet, dass** das erwärmte Wärmeträgerfluid aus dem höheren Bereich (8) auf der sonnenzugewandten Gebäudeseite (7) in einen Strömungskanal (10)eingesaugt und durch den Strömungskanal (10) zu dem niedrigeren Bereich (13) auf der sonnenabgewandten Gebäudeseite (12) geführt wird.

5. Verfahren nach Anspruch 3 oder Anspruch 4, **dadurch gekennzeichnet, dass** das erwärmte Wärmeträgerfluid über einen Verteilerkanal großflächig in kühlere Bereiche innerhalb der Gebäudeumhüllung eingebracht und verteilt werden kann.

6. Verfahren nach einem der vorangehenden Ansprüche, **dadurch gekennzeichnet, dass** ein Anteil der in dem erwärmten Wärmeträgerfluid enthaltenen thermischen Energie einer thermischen Speichereinrichtung zugeführt und darin gespeichert wird.

7. Befestigungsvorrichtung (17) für eine Gebäudefassade (3) mit einem ersten Befestigungselement (18) zum Festlegen der Befestigungsvorrichtung (17) an der Gebäudefassade (3) eines Gebäudes (1) und einem zweiten Befestigungselement (20) zum Festlegen eines Hüllenelements (30, 37) an der Befestigungsvorrichtung (17), wobei das erste Befestigungselement (18) über ein Abstandselement (19) mit dem zweiten Befestigungselement (20) verbunden ist, **dadurch gekennzeichnet, dass** das zweite Befestigungselement (20) an einer Vorderseite (21) zwei beabstandete und nach außen vorspringenden Anschläge (22) aufweist und dass ein näherungsweise U-förmiges Profilelement (24) mit zwei beabstandeten Schenkeln (25) und einem die beiden Schenkel (25) verbindenden verformbaren Verbindungsabschnitt (26) an dem zweiten Befestigungselement (20) angeordnet ist, wobei an von der Vorderseite (21) des zweiten Befestigungselements (20) abgewandten Schenkelenden (35) der Schenkel (25) jeweils ein zugeordnetes Hüllenelement (30, 37) festlegbar ist, wobei der Verbindungsabschnitt (26) des Profilelements (24) an der Vorderseite (21) des zweiten Befestigungselements (20) an den Anschlägen (22) anliegend mit einem zwischen den Anschlägen (22) angeordneten Befestigungsmittel so festlegbar ist, dass im festgelegten Zustand der Verbindungsabschnitt (26) des Profilelements (24) verformt ist und die Schenkelenden (35) der Schenkel (25) des Profilelements (24) aufeinander zu verlagert sind.

8. Befestigungsvorrichtung (17) nach Anspruch 7, **dadurch gekennzeichnet, dass** das Profilelement (24) eine Profilschiene ist.

9. Befestigungsvorrichtung (17) nach Anspruch 7 oder Anspruch 8, **dadurch gekennzeichnet, dass** in dem Profilelement (24) ein näherungsweise U-förmiges Haltelement (27) angeordnet ist.

10. Befestigungsvorrichtung (17) nach Anspruch 9, **dadurch gekennzeichnet, dass** zwischen dem Halteelement (27) und den beiden Schenkeln (25) jeweils ein Zwischenraum (29) ausgebildet ist, in dem ein Endbereich des zugeordneten Hüllenelements (30) festlegbar ist.

11. Befestigungsvorrichtung (17) nach einem der Ansprüche 7 bis 10, **dadurch gekennzeichnet, dass** an der Befestigungsvorrichtung (17) Spann- oder Federelemente zum Verspannen eines Hüllenelements (30) festgelegt sind.

12. Befestigungsvorrichtung (17) nach einem der Ansprüche 7 bis 11, **dadurch gekennzeichnet, dass** an den Schenkelenden (35) Winkelprofile (36) festgelegt sind, die eine Seitenkante eines formstabilen Hüllenelements (37) umgreifen.
